# EUROPEAN PATENT APPLICATION

(11) **EP 2 821 947 A1**
(43) Date of publication of application: **07.01.2015**
(21) Application number: 13003340.0
(22) Date of filing: 02.07.2013
(51) Int. Cl.: G06Q 10/10

(54) **Method and system to support technical tasks in distributed control systems**

(71) Applicant: ABB Technology AG, 8050 Zürich (CH)
(72) Inventor: Schulz, Dirk, 67149 Meckenheim (DE); Drath, Rainer, 68239 Mannheim (DE)
(74) Representative: Kock, Ina

(57) **Abstract**

Method and computer system to support technical tasks in distributed control systems, The system has at least one memory configured to store a workflow-aware object (162) of a plurality of workflow-aware objects, wherein the workflow-aware object represents (142) at least one component (102) of an automation system (100). At least one computation component (164) is associated with the workflow-aware object (162), and has an interface (165) to receive (144) specific data of the automation system (100). The computer system (150) further includes at least one processor configured to execute the at least one computation component (164) to compute a workflow item (175) based on a workflow item profile (170) with user related information, and based on the specific data of the automation system (100)), wherein the workflow item profile (170) specifies an object reference (146) to the at least one component (102) of the automation system (100), and wherein the user related information is configured for retrieval (148) of a user identifier being associated with the automation system engineer (110). A workflow item collector (180) is configured to identify the workflow item (175) based on predefined identification rules. The computer system (150) further includes a user interface component (190) configured to communicate the identified workflow item (175) to the automation system engineer (110) by use of the retrieved (148) user identifier.

## Description

### Technical Field

The present invention generally relates to electronic data processing, and more in particular to data processing related to field devices in distributed control systems.

### Background

Automation systems such as Distributed Control Systems (DCS) are typically dynamic systems of hard- and software-components in which the controller elements are not centralized but distributed throughout the system with each component sub-system controlled by one or more controllers. The entire system of controllers is connected by communication and monitoring networks.

Such computerized control systems monitor and control the distributed field devices in, for example, electrical power grids, electrical power plants, environmental control, oil refining plants, chemical plants, pharmaceutical manufacturing, discrete manufacturing, sensor networks, water management systems, traffic management, etc.

A DCS normally incorporates a large number of hard- and software-components which need to be engineered (e.g., procured, installed, maintained, and repaired) in non-obvious and complex workflows. Various tool sets are available for workflow engineering; often a specific tool is required for a specific workflow context. The tool sets are normally complex and require a high degree of expert training.

An engineered DCS illustrates processes to the human expert in order to provide and allow human interventions. The processes can be current processes as well as planned (future) processes. Therefore, the Human Machine Interface (HMI) of a DCS should support an engineer in performing the complex processes/workflows.
workflow support in a given context is mostly unavailable. The available support is typically hard-coded into each engineering tool since the tool has the required data. The DCS, however, has little control on visualization, handling, execution, and status of the workflows since the related information is unaligned or capsulated in respective tools. Thus, engineers have to cope mostly with insufficient system support for a multitude of non-trivial workflows inside a complex system with thousands of components.

### Summary

Therefore, there is a need to improve automation systems to guide automation system engineers through the non-trivial workflows controlled by distributed control systems of complex systems with a large number of components and, thereby, supporting the automation system engineers in performing their technical system tasks.

Embodiments of the invention provide system and method for support of automation system engineers of a distributed control system (DCS)/automation system. Such automation system engineers may operate the DCS. Operating the DCS in this context includes setting up components, maintaining components or any other activity which the automation system requires to be performed by the operator.

Aspects of the invention provide a computer system for support of an automation system engineer including at least one memory configured to store a workflow-aware object of a plurality of workflow-aware objects, wherein the workflow-aware object represents at least one component of an automation system. In other words, the workflow-aware object (automation object) represents or relates to at least one physical or virtualized component of the automation system. Alternatively, the automation object may represent a group of automation objects which may represent components of the automation system. The computer system may also be implemented as part of the automation system. The automation objects may also be object instances running in the automation system. For example, a component of an automation system may be a field device of the automation system or it may enclose a group of field devices or it may correspond to a field bus. Thus, workflow-aware objects may represent device packages or software modules of field devices, or other system functions. For example, a workflow-aware object may represent an I/O signal, or it may represent a sensor.

The memory can further store at least one computation component which is associated with the workflow-aware object, and which has an interface to receive specific data of the automation system. The specific data can be data generated by anyone of the automation system components, for example, indicating a current technical status of the respective system component. The specific data of the automation system may, for example, relate to data of an I/O signal, the data output of a sensor, or to addresses. In one embodiment, the specific data of the automation system can be part of the workflow-aware object and the computation I/O signal, the data output of a sensor, or to addresses. In one embodiment, the specific data of the automation system can be part of the workflow-aware object and the computation component can access the specific data through the associated workflow-aware object. In one embodiment, the specific data can be actively retrieved by the computation component from other data sources in the automation system. The computation component includes logic adapted to perform specific computing operations which can be based on the specific data. That is, workflow-aware objects may be associated with logic implemented by the computation component which may be specific for the component of the automation system, or may reference to other objects or system functions.

The computer system further includes at least one processor for executing the at least one computation component (e.g., by executing the respective logic) to compute a workflow item based on a workflow item profile including user related information and the specific data of the automation system. Computing a workflow item as used hereinafter includes instantiating the workflow item in the computer system. A workflow item in this context is a set of data describing a user or describing a system task related to and referencing a component of an automation system. The workflow item may include a description of the task to be performed and user related information (e.g., a reference to the user) and/or a reference to the system part that is intended to execute it. The workflow item can be based on at least one workflow profile, wherein the workflow item may be created temporarily or persistently (e.g., for logging a specific function). In other words, the workflow item can inherit one or more properties of the workflow profile. The workflow item profile specifies an object reference to the at least one component of the automation system and includes the user related information allowing to retrieve a user identifier. The object reference may directly relate to the at least one component or indirectly via the workflow-aware object. In the following, a direct reference is used in the description; the skilled person, however, knows how to implement other forms of referencing, such as indirect references. The retrieved user identifier is associated with the automation system engineer, the person who operates the DCS. The user identifier may be retrieved from an identification of a specific user, a user group, or a reference to a system which resolves the ID to an actual user. In other words, the workflow item is the result of processing specific data of the automation system and logic associated with the workflow-aware object wherein the workflow item is based on a workflow item profile. The workflow item profile enables integration of the individual tasks of an automation system engineer in regards to at least one component of the automation system within a complex overall workflow management with a large number of components of the automation system and multiple automation system engineers.

The at least one processor can further execute a workflow item collector configured to identify the workflow item based on predefined identification rules. Such predefined identification rules may relate to information of the workflow item profile and/or the retrieved user identifier. Predefined identification rules may also be directed to a specific storage location of the workflow items or to specific indicators (e.g., flags) of the instantiated workflow items. In other words, the workflow item collector has knowledge in form of the predefined identification rules allowing collecting all technical tasks for the respective automation system engineers. As a result the automation system will know any potential technical task that can be performed by the automation system engineer. The workflow aware-objects are able to compute or instantiate the respective workflow items automatically taking away the burden from the automation system engineer to understand the complex workflows or the component structure of the automation system.

By use of the retrieved user identifier the computer system can then use a user interface component to communicate the identified workflow item to the automation system engineer for providing guidance.

In one embodiment, the computer system can store a workflow data structure representing an engineering phase in relation to the automation system. The workflow data structure has at least one workflow step and the workflow step has an association to a workflow task of the workflow-aware object. The association can be stored in the at least one memory. In other words, the workflow data structure can be considered as a template describing the tasks which are to be performed by system engineers in the respective engineering phase. By storing the association to the respective task of the workflow-aware object the system can automatically derive an engineering phase for each object in which technical operations for the respective automation system component(s) are to be expected. The workflow data structure may be combined with a further workflow data structure to compose a workflow. That is, such an overall workflow can include multiple engineering phases being represented by respective workflow data structures (templates). In this case, the system can automatically derive for each object engineering phases in which technical operations for the respective automation system component(s) are to be expected. This can be used to visualize all tasks associated with a workflow-aware object in a workflow view at the corresponding steps of the engineering phases enabling a component based workflow view for each system component. The at least one processor may instantiate the workflow task associated with such a step as a further workflow item prior to being identified by the workflow item collector. This is possible because the system already knows in advance that the respective workflow item will be executed in the future.

In one embodiment of the invention, the specific data of the automation system received by the interface of the at least one computation component is based on another workflow-aware object. In other words, the other workflow-aware object can provide specific data of the automation system which influences the workflow status of the workflow-aware object. For example, ten out of twenty workflow items indicate that physical inspection of their respective field devices is required. An (aggregating) workflow item references these 10 workflow items and states that ten respective devices require physical inspection in the field; the other ten workflow items can be aggregated to a workflow item that only indicates a change in parameter settings. In other words, an overview of software- and hardware-related tasks is provided.

In one embodiment of the invention, the memory is further configured to store a pure workflow-aware object which is associated with the workflow-aware object and which is further associated with at least one further computation component. The at least one further computation component when executed by the at least one processor can compute a further workflow status based on the workflow status. In other words, the pure workflow-aware object provides an abstraction layer to at least one workflow-aware object, for example, to compute combined or overall workflow statuses (e.g., filtering or aggregation). Basically, pure workflow-aware objects are only related to processing of workflow statuses.

In an alternative embodiment of the invention, the at least one memory is further configured to store a workflow-aware retrofit object which is associated with a workflow-unaware object representing an arbitrary component of the automation system. Workflow-aware retrofit objects allow analyzing workflow-unaware objects. Nowadays, (automation) objects typically are workflow-unaware. The option to install retrofit functionality into operational computer systems allows making the respective DCS workflow aware, thus, the workflow support is not restricted to new DCS installations.

In one embodiment of the invention the workflow item has data to be communicated to the automation system engineer. Such proprietary data is not related to a workflow item profile and basically only intended to be presented to the automation system engineer. In other words, there is "payload data" that can be communicated to the engineer, but that is not part of the profile (or template).

In one embodiment, the workflow item references to a work context. The work context might be a context within which the workflow item has occurred or can be solved. For example, the work context can be defined by a software tool where a user has navigated via a user interface to the referenced object and the respective view in which the task is to be performed.

In one embodiment of the invention, the workflow item profile is enriched with additional information that is shared by a sub-set of components of the automation system.

In one embodiment of the invention, the computer system further includes a view component communicatively coupled with the user interface component configured to display workflow items identified based on the workflow item profile.

In one embodiment of the invention, the computer system further includes a selector component configured to aggregate, sort, or filter workflow items identified based on the workflow status profile.

In one embodiment of the invention, the automation system has groupings of automation system components and the specific data of the automation system relates to any one of the groupings. In other words, an automation object (workflow-aware object) may relate to any one of the groupings and the respective computation component (workflow logic) can compute a workflow item describing a task for the related grouping.

### Brief Description of the Drawings

FIG. 1 is an overview showing a computer system and an automation system.
FIG. 2 shows data structures and a workflow-aware object.
FIG. 3 shows a workflow composed of data structures.
FIG. 4 shows a pure workflow-aware object associated with workflow-aware objects.
FIGs. 5 and 6 show a workflow-aware retrofit object associated with workflow-unaware objects.
FIG. 7 shows a workflow-aware object representing a system and which is associated with computation components.
FIG. 8 illustrates a simplified flowchart of a computer implemented method according to an embodiment of the invention.

### Detailed Description

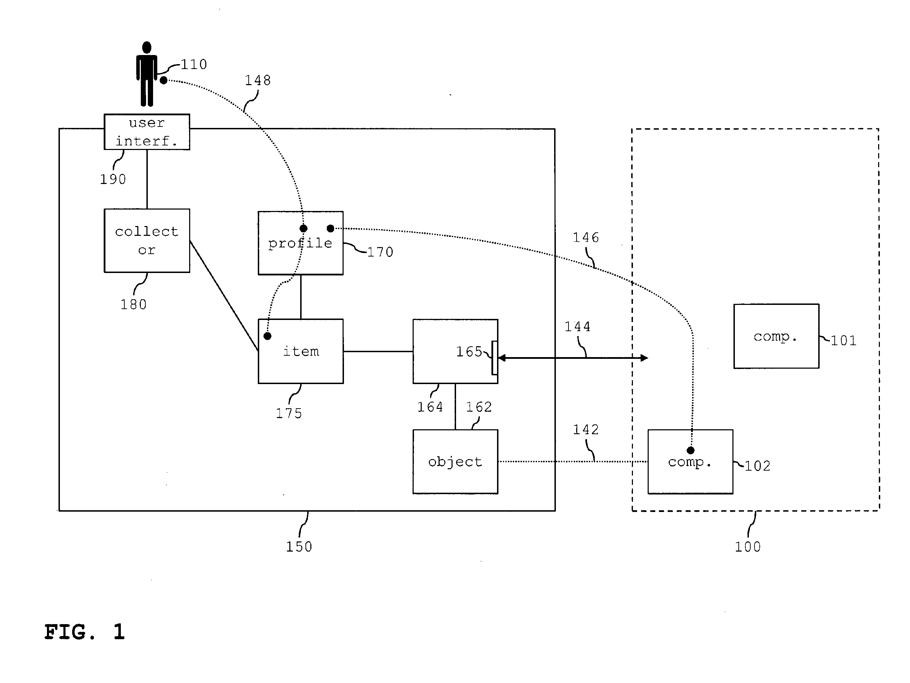

FIG. 1 is an overview showing a computer system 150 and an automation system 100. Components 101, 102 of the automation system 100 may be part of a distributed control system. Components 101, 102 can be any kind of automation system 100 object, for example, an arbitrary fieldbus device, a wireless network device, a function, a virtualized computer, or an object relating to operational data (e.g., monitoring, maintenance, etc.)

For example, a Device Management System (DMS) in the Distributed Control System (DCS) of the automation system 100 may be populated with a large number of field device instances. A subset of the field device instances may use a fieldbus technology; another subset may go through remote IO systems which transparently comply to the HART protocol.
The distributed control system (DSC) may be part of the automation system 100. The DSC can include devices, such as remote IO systems, that comply the standardized protocols such as the HART protocol.
In addition to such devices, the Device Management System may be provided. It can be part of the computer system 150. The DMS uses computer instances that correspond to the device (or represent them)

Computer system 150 may inform automation engineer 110 about engineering and operational tasks or data of components 101, 102 being part of automation system 100.

Computer system 150 may include a memory configured to store a workflow-aware object 162 of a plurality of workflow-aware objects. The workflow-aware object 162 may represent 142 a component 102 of the automation system 100. Components 101, 102 can represent IO modules, IO head stations, fieldbus masters, or any other field device or grouping of devices available in the automation system 100. The computer system 150 can instantiate a workflow-aware object (automation object) for each such component, wherein the automation object represents a real device component 101, 102 in a respective technical facility. In other words, the automation object may relate to at least one physical or virtualized component of the automation system. Alternatively, the automation object may represent a group of automation objects which may represent components of the automation system.

The memory may be further configured to store a computation component 164 which is associated with workflow-aware object 162. The computation component 162 has an interface 165 to receive 144 specific data of the automation system 100. The specific data may be data about the component 102, or data related to component 102. The computation component 162 can include logic which can be executed at runtime to evaluate the specific data. An object becomes a workflow-aware object through the logic of the associated computation component which allows the assessment of workflow status as explained in the following.

Computer system 150 may further include a processor configured to execute the computation component 164 to compute a workflow item 175. The computation is based on a workflow item profile 170, a retrieved 148 user identifier and the specific data of automation system 100. In other words, workflow items can provide a status about the components 101, 102 of automation system 100. The logic and the subset of system data (i.e., the specific data) to which the logic is applied may relate to the respective workflow-aware object, but may also relate to other objects or system functions.

For example, in case the computation component 164 is associated with a workflow-aware object 162 representing a fieldbus master 102, the execution of the respective logic of the computation component 164 may check the addressing of the respective fieldbus devices and remote IO head stations upon receipt of the specific address data from the automation system. For example, the execution of the logic may recognize the existence of two devices on the same segment having identical addresses. In the example, such an identical address can lead to error and should be avoided.

As mentioned, the computer 150 informs the engineer 110 about engineering and operational tasks. Such tasks can be presented as workflow item. To compute the workflow item 175 describing this situation, the computation component makes use of the workflow item profile 170 which has a reference 146 to the fieldbus master component 102 and to user related information. As mentioned the user can be the automation system engineer 110.

The computed workflow item 175 may be classified as an error description, referring to the fieldbus master component and to the respective automation system engineer 110. Alternatively, the computation component 164 may compute a plurality of workflow items describing this situation (in the example classified as an error), referring to each of the respective automation system components (e.g., the devices comprised by the fieldbus master component 102), and referring to the respective automation system engineer. For such purpose to inform the engineer 110, the workflow item profile may be enriched, for example, by using knowledge about the component hierarchy of the automation system 100. The representing automation objects may store parent child relations between the fieldbus master component and the respective comprised field device components. In other words, on the basis of the represented component hierarchy the workflow item profile 170 having the reference to the fieldbus master, component 102 may be enriched with references to the child field device components of the fieldbus master. In general, the workflow item profile can be enriched based on commonalities of a subset of components of the automation system. Workflow items computed/instantiated for this subset of components use the enriched profile. On the basis of the additional references the computation component can compute multiple corresponding workflow items based on the workflow item profile 170. This is advantageous to the engineer 110, because the relations between physical devices are taken into account so that the engineer 110 can take device interdependencies into account.

The reference to the automation system engineer may be stored in the workflow item profile 170 as a corresponding user identifier 148. The workflow item profile 170 also may just store user related information (e.g., a link) to retrieve the user identifier otherwise, for example, from another system or as a query input manually provided. The user identifier may further allow providing a specific view on the status about component 102 via workflow item profile 170. In that case, different users have different views. Or, the amount of information to be presented to the human users can be limited to particular persons.

Besides the user related information and the reference to an automation system component, basic workflow item profile 170 may further include a technical task summary describing the activity to be performed and its goal, and a reference to a workflow-aware (automation) object whose associated logic has created the workflow item (source), and a reference to the component of the automation system or its representing automation object on which the task is to be performed. For example, a workflow-aware automation object for a fieldbus master can identify duplicate addresses by screening for identical addresses on its slave devices; the automation object representing the master is the source of the workflow item, the device or devices which require re-addressing are the targets. It may be sufficient that the fieldbus master is a workflow-aware automation objects, the slave devices may not have to be represented by automation objects but only their tags are used in the reference.

The basic workflow item profile can be enriched to a managed workflow item profile by task management details which are useful to manage the tasks associated with the task type of the workflow profile in the context of target or source components. Such task management details may include the effort needed for performing a respective task, the current workflow state or workflow step that the task is in, a due date indicating a time limit for executing the task, and an estimated date indicating the actual completion of the task. For example, a task described by an existing workflow item may be first 'requested', then 'approved', 'scheduled', 'in execution', and eventually 'finished'.

The managed workflow item profile can be further enriched to a maintenance profile by technical task details which are useful for the maintenance of the respective automation system component. Such technical task details may include a symptom which may be shown by the automation component, a root cause which may indicate the reason for the occurrence of the symptom, and a suggested action which may be appropriate to cure the automation system component from said symptom. This information can be supplied by correspondingly enriched workflow logic or it may be taken from another expert function of the automation system. For example, identical addresses on the same fieldbus segment may already be the root cause leading to the symptom of 'communication collisions' and the suggested action may be 'change the identical address' on one of the devices or to 'trigger automatic address distribution' on the fieldbus master. In another example, condition monitoring systems provide health reports (e.g., status reports, operation reports) on devices, including symptoms, root causes, and suggested actions. The detection of a health problem may be what causes the workflow logic to create a workflow item related to fixing the health problem; the workflow logic then takes over symptom, root cause, and suggested action into the managed workflow item profile to make it available easily to every user or system involved in managing the workflow item and, thus, executing the task.

Any workflow item profile may be further enriched by additional properties such as task type (e.g., software configuration or setting parameter values, software-centric tasks such as programming, physical interaction with a device that also requires physical presence in the field), task priority, and task impact (e.g., on availability of the system, effort for follow-up tasks). Task type can be hard-coded into the workflow logic. Task impact may be inferred from the relevance of the represented automation system component (which may be project specific); it can, for example, be given as 'cost per hour' of failure.

The computer system 150 only requires knowledge of the workflow item profile to manage workflow items regardless of their source. This enables the computer system 150 to even compute and manage workflow items based on specific data originating from components, objects, or systems that are unknown during deployment of the automation system. Management of workflow items includes to compare, aggregate, filter, log, present or visualize, or forward workflow items for users, other system functions, or entire other systems.

The computed workflow item 175 may be identified by a workflow item collector 180 by predefined identification rules. For example, the workflow item collector 180 can be notified by the DMS to retrieve the computed workflow item(s) and to assign the retrieved workflow item(s) to the respective automation system engineer(s) based on pre-defined rules (e.g., by using a device tag of the automation system component for which the workflow item is computed). Workflow status is collected (by polling or being the receiver of workflow status change events) by a system function, which may do additional processing (e.g., filtering). In general, the collection function of the workflow item collector can make selected workflow items available to a workflow status viewer as part of a user interface of the computer system 150. In other words, the collector 180 can be considered as a workflow assembler to identify the suitable workflow to the engineer 110. Automation system engineers can be the recipients of workflow item information; the workflow status viewer may support the user through additional filtering or aggregation functions.

The workflow item collector may also interact with external systems to exchange a subset of selected workflow items (e.g., send, receive, or initiate one or more round-trips including updates of the workflow item content). Thus, different systems can collaborate and provide a cross-system workflow to users without the users having to know the other system and without any tight coupling of runtime aspects of the systems. For example, a device management system in a DCS and a Computerized Maintenance Management System (CMMS) from a separate service company (or from a separate computer) are coupled in this manner. Depending on the state of the workflow item, the workflow item collector forwards a subset of the workflow item to the CMMS. This may include a transformation of data, for example, transforming a DCS-internal reference to an automation object into an asset reference as used by the CMMS. Depending on the responses from the CMMS, the workflow item collector updates the state and other data (e.g., expected due date) of the workflow item. By this, the workflow management system integrated with the DCS allows shared workflows across DCS and CMMS.

Computer system 150 may further include a user interface component 190 to communicate the workflow item(s) 175 to the respective automation system engineer(s) 110 (or user in general).

For example, a first automation system engineer may open his work item list. He can see the workflow item 175, interact with the workflow item (e.g., by clicking on a graphical representation of the workflow item or by any other appropriate user interaction), and can then decide to resolve the situation in the system 100 that is presented to him, which takes him to the fieldbus master instance (workflow-aware object 162 instance). In the user interface, he can further navigate to see information regarding the fieldbus segment where, for example, two device component instances are already marked. He may change one of the duplicate field device addresses to a new number, either by manually setting a free number or by asking the fieldbus master instance to auto-assign addresses. This change is forwarded to the automation system 100 to take effect.

Triggered by the user interaction (of the user 110) with the fieldbus master workflow-aware object 162 through the user interface component 190, the logic of the associated computation component 165 can check the modified device component 102 instance by retrieving the modified address data and can remove the previously created workflow item because it has been executed successfully by the automation system engineer. The work item list of the automation system engineer is now empty.

In another example embodiment, the logic of the computation component 164 is associated with a workflow-aware object 162 which represents a field device component 102. The logic may be configured to compare default parameter values from a description of a device type of the field device component to actual values received as specific data through the interface 165. A device type can provide a description of properties or capabilities which are common to a specific group of devices. For example, there may be temperature sensors which are more suitable for high-temperature ranges and other sensors being appropriate for low temperature ranges. Accordingly, sensors for the high temperature ranges may have a common set of properties or capabilities which can be summarized in a corresponding high temperature sensor device type. Analogously, the low temperature sensors may be of a low temperature sensor device type. Workflow-related information for these common properties or capabilities can be part of the workflow item profile 170.

For example, the logic may conclude that the field device component is still set with default values only. Such a setting may be considered untypical and is most likely incorrect. The computation component can compute a workflow item describing this situation which may be classified as a warning (not as an error), referring to the respective field device component instance and to the automation system engineer. The engineer 110 is made aware of the situation and can take appropriate actions, such as manually re-set the values.

The workflow item collector is notified by the DMS, retrieves the workflow item - or, in case of a plurality of field device components, retrieves the respective workflow items -, and, based on a pre-defined rule (e.g. using the device tag), assigns the workflow item(s) to the available automation system engineers.

A first system engineer A may open his work item list. The list implementation selects all workflow items for A and may aggregate the workflow items with the same task description leading to one aggregating workflow item, which states that a certain number of field devices may require (project-specific) parameterization.

First system engineer A can unfold the original list of work items and, for example, click on the first item which can take him to a device instance parameterization dialog. For example, he can set the temperature unit for the field device from the default value °F to the corrected value °C, save the changes, and close the parameterization dialog.

Triggered by a user interaction with the respective workflow-aware object (device automation object), the logic of the associated computation component checks the modified device component instance and can remove the previously created workflow item in case of successful execution of the workflow item. The workflow item list now shows one entry less which is also reflected by the aggregating workflow item.

The system engineer A may then collapse the list and, for example, click on the aggregating workflow item to be taken to the next workflow item which is aggregated. After finishing with the respective field device component, the list can be updated again in the described manner, by removing the successfully executed workflow item.

For improving efficiency, system engineer A may open a filter dialog and select all field device components which are temperature transmitters. The aggregating workflow item can now change to show such field device components needing parameterization. He can, for example, click on the aggregating workflow item and select a group parameterization for the comprised workflow items. The DMS may deny this if not all field device component instances are derived from the same device type. System engineer A may update the applied filter by additionally grouping the temperature transmitters by device type. This may result in multiple workflow items grouped by device type wherein each group can be represented by its own aggregating workflow item.

Upon user interaction with the first workflow item and selection of an option "group parameterization" the DMS can verify if the applied action is correct (e.g., if parameterization is possible for the particular group), and, if so, may open a group parameterization dialog. Again, system engineer A may change the temperature unit from °F to °C, which is then applied to all field device component instances in the respective group.

In another embodiment, specific types of devices, such as flow transmitters, may require in-the-field calibration (CD). In this embodiment, workflow logic that is capable of checking the need for such a calibration may be deployed as part of the set of device type descriptions. This may be needed when a field device component is installed and repeated calibrations may be needed in the facility because of the elapsed time or the use of the device. In an example scenario, a number of ten devices may require such calibration. The logic associated with each of them by device type can identify the need for calibration and, for example, create ten corresponding workflow items with a corresponding task description. The ten workflow items may relate to field device components for which system engineer A is responsible. In this case they all appear in the workflow item list of A and may be aggregated into an aggregating workflow item stating that ten field devices require calibration.

In general, for field devices device type descriptions and device tools for a particular type of device (e.g., one version of a temperature transmitter from a particular vendor) can be provided. A device type description file can, for example, describe data and functionality of the field devices, how they are mapped to communication telegrams, and which logical constraints there are between parameters. They may further offer user interfaces for users to view and modify the functioning of any device instance derived from this type. Example formats are ELECTRONIC DEVICE DESCRIPTION LANGUAGE (EDDL), Field Device Tool Device Type Manager (FDT DTM), and device description language GSDML. In one embodiment, respective workflow logic can be delivered within a set of device descriptions implemented as one or more methods in EDDL, implementing the supported profiles through EDD variables.

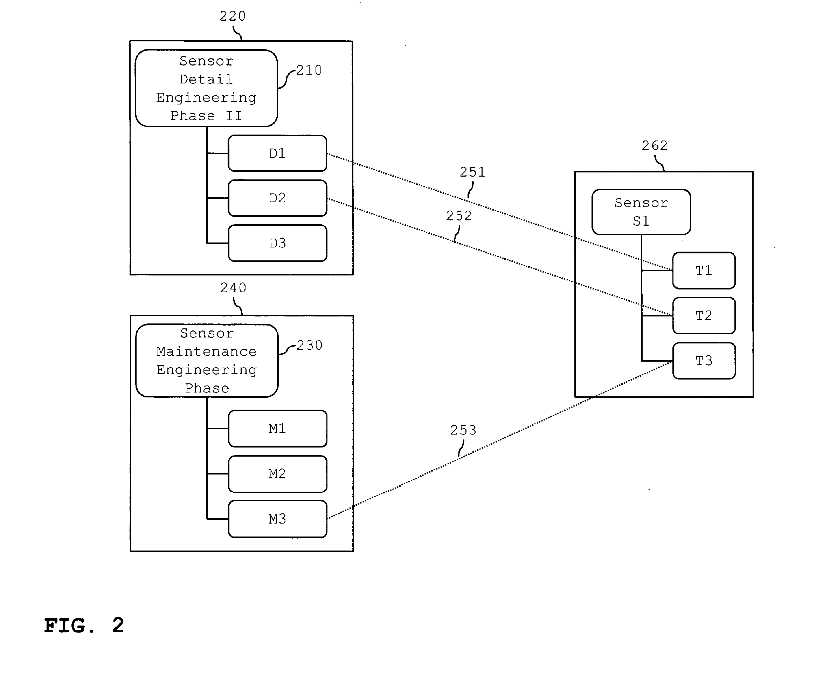

FIG. 2 shows data structures 220, 240 and the workflow-aware object 262. Data structures 220, 240 may represent engineering phases 210, 230 for a DSC, for example, in the order of detailed engineering of a sensor network, commission engineering of the sensor network, or the maintenance engineering of sensors part of the sensor network. Data structure 220, for example, may represent "Sensor Detail Engineering Phase II" with workflow steps D1, D2, D3. Data structure 240, on the other hand, may represent "Sensor Maintenance Engineering Phase" with workflow steps M1, M2, M3.

The workflow-aware object 262 may represent a temperature sensor component having a device type S1. Moreover, the workflow-aware object 262 can be a generic workflow-aware object representing all sensors of device type S1 and having data about specific engineering steps T1, T2, T3 for the device type S1 (e.g., T1: "engineering of S1 power supply", "T2: setup of the S1 Profibus connection", or "T3: clean sensor").

A workflow step may be associated with an engineering step. That is, a workflow step is a representation of at least a part of real engineering task. For example, workflow step D1 may be associated 251 to engineering step T1, D2 may be associated 252 to T2, and M3 may be associated 253 to T3. Associating workflow steps to engineering steps enables the workflow-aware object to have also knowledge about the data structures it is associated with. In other words, such a generic workflow-aware object knows which of its engineering steps are associated with specific workflow steps of a respective engineering phase. Therefore, an explicit pointer of the generic workflow-aware object to the respective data structures is not even needed, although it can be implemented as redundant information.

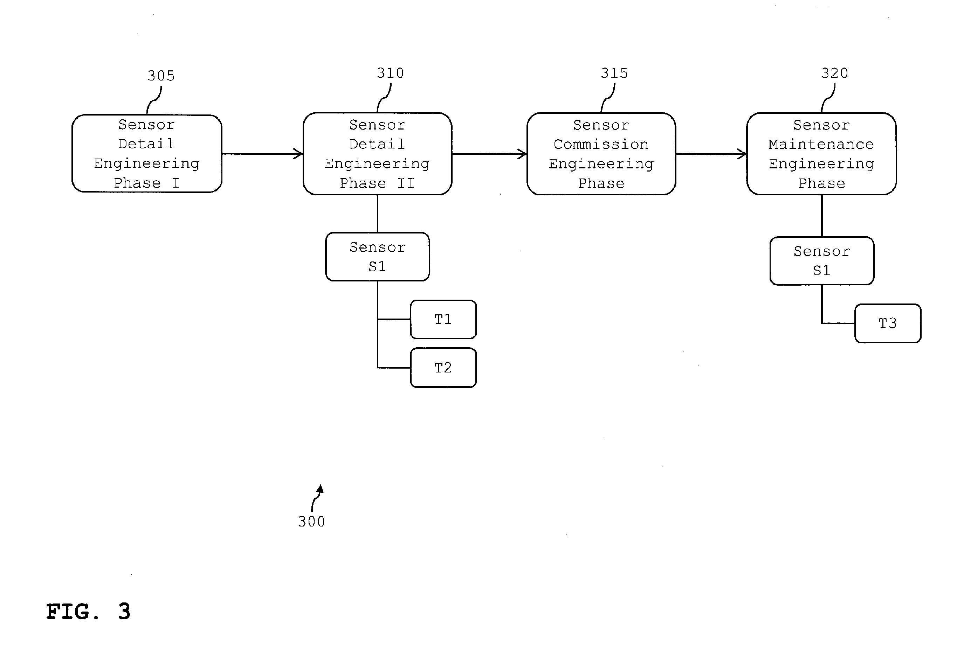

FIG. 3 shows a superior workflow 300 composed of multiple data structures 305, 310, 315, 320. The superior workflow 300 can be presented via the user interface 190 to engineer user 110. The superior workflow 300 can be considered as a meta-workflow that combines several sub-workflows, or in other words, the workflow 300 is a hierarchical workflow. A superior workflow 300 is an arrangement of data structures 305, 310, 315, 320 representing engineering phases, workflow-aware objects may have knowledge about the specific phase of a workflow they are part of and which of their engineering steps is executed in a particular phase.

In other words, a workflow-aware object has data about which engineering tasks are associated for its engineering in which workflow step of a workflow 300, whereas workflow 300 is designed of compatible workflow structures 305, 310, 315, 320 which are prepared to be associated with workflow-aware objects.

This also allows engineering tools to design and combine workflows based on the data structures representing engineering phases. After such a workflow design, the workflow-aware objects are automatically associated with the workflow.

For example, the various data structures 305, 310, 315, 320 can be placed in a pre-defined sequential order, thus defining a superior workflow 300 as an arrangement of the represented engineering phases Sensor Detail Engineering Phase I, Sensor Detail Engineering Phase II, Sensor Commission Engineering Phase, Sensor Maintenance Engineering Phase. As a consequence, a workflow-aware object can provide visualization information regarding the associations 251, 252, 253 (cf. FIG. 2) to the user interface component of the computer system. The visualization information can be used for example, to indicate the engineering steps T1, T2, T3 of the workflow-aware object in a visualization of the superior workflow 300. The indicating can use any appropriate visualization effect, such as for example, highlighting, overlaying, animating, etc. This may be used to provide a quick overview of the technical tasks associated with the respective automation system component (e.g., Sensor of device type S1) to an automation system engineer. In the example of FIG. 3, the visualization of the engineering steps indicates that T1 and T2 are required in the Sensor Detail Engineering Phase II (data structure 310) and T3 is required in the Sensor Maintenance Engineering Phase (data structure 320).

A further technical implication of associating engineering steps of the workflow-aware object with the workflow steps of the respective data structures is that the computer system can anticipate workflow items for workflow-aware objects because it already knows which engineering tasks will come next according to the superior workflow. For example, a maintenance task will occur always whereas an error fixing or repair task may occur. At least for those engineering tasks which can be anticipated the system can instantiate the respective workflow items offline without a need for any online input in the form of specific data from the represented automation system component. For example, the "T3: clean sensor" engineering task will always be necessary as part of the "M3: Sensor Maintenance Engineering Phase" (cf. FIG. 2). In other words, a workflow-aware planning object may relate to tasks which can be planned in advance. When such a new planning object is added it can adapt itself to the superior workflow and make itself known to the superior workflow. The system can instantiate the respective workflow item offline simply on the basis of the maintenance workflow item profile information without requiring a trigger in the form of specific automation system data from the respective automation system component. In other words, the computer system can instantiate the engineering workflow task as a further workflow item prior to being identified by the workflow item collector in the normal online mode. The normal online mode is referred to as to what is described in the description of FIG. 1, where the workflow item collector is finally instantiating the computed workflow item for the respective automation system engineer.
In one embodiment, the automation system engineer may add a new automation system component to the device component topology of the automation system. A (generic) workflow-aware object representing the new component can be automatically associated with the superior workflow 300 if the device type of the new component is associated with a corresponding data structure representing an engineering phase of the superior workflow. From each workflow step, if associated, the considered new component and context sensitive engineering tasks can be explored. On the other hand, from each concrete sensor, the belonging workflow steps and corresponding engineering tasks can be explored. In one embodiment, the superior workflow is configured to perform an auto-complete function when a new workflow-aware planning object is added. This may occur at any position within the superior workflow. For example, when adding a new workflow-aware planning object representing a specific sensor which requires a specific calibration component, the superior workflow may be auto-completed in the sense that a respective representation of the calibration component is added automatically.

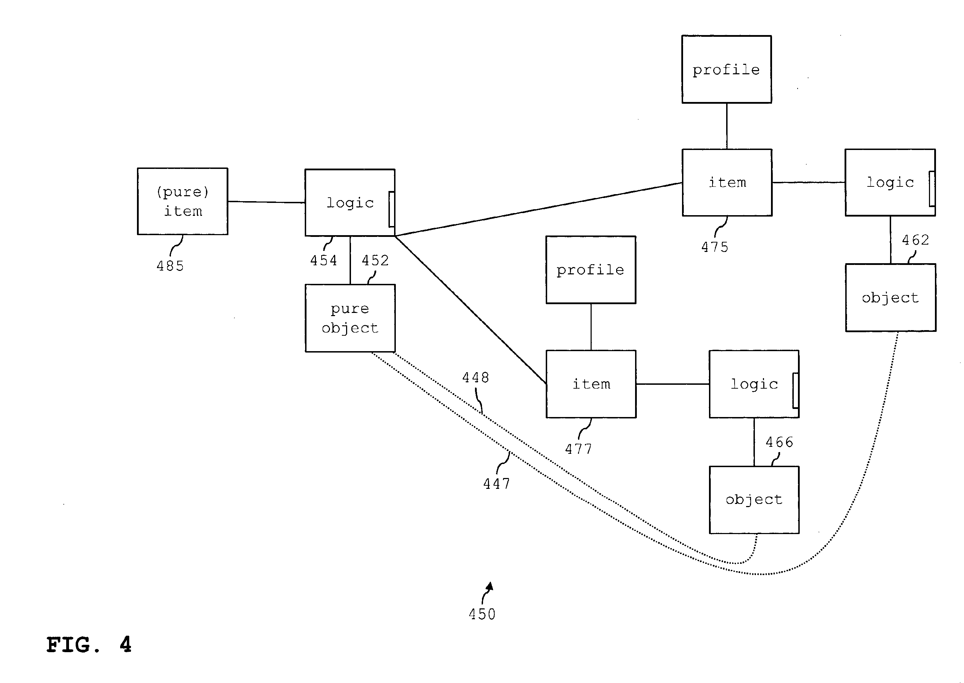

FIG. 4 shows a pure workflow-aware object 452 associated with workflow-aware objects 462, 466. The pure workflow-aware object 452 which is associated 447, 448 with a workflow-aware object 462, 466 is further associated with at least one further computation component 454. The least one further computation component 454 is configured to compute a further workflow item 485 based on the workflow item 475 which has been computed by the logic of the computation component associated with the workflow-aware object 462, 466. In other words, the task of a pure workflow-aware object is to further process workflow items computed by other workflow-aware objects. That is, the further computation component of the pure workflow-ware object may not receive any specific data from the automation system components. The only input for the further computation component may come from already computed workflow items. The associations 447, 448 with other workflow-aware objects indicate which workflow items are potential candidates providing input to the further computation component 454. However, pure workflow-aware objects may generally work on any kind of accessible data subsets from the automation system. They are not restricted to accessing only workflow items.

Pure workflow-aware objects can therefore be used for filtering or aggregating of workflow items while using the same describe method as for any other kind of workflow item. For example, the workflow logic of a pure workflow-aware object checks if there is at least one device that still requires parameterization. If that is the case, it may create a corresponding aggregating workflow item stating this tasks and the number of concerned devices (each of which has its individual workflow item already). The evaluation of data and creation of workflow items as such works as previously described. The difference is that in this case, workflow items may be evaluated. The aggregating workflow item references the previously existing workflow items on which it is based. This allows the workflow item collector and the workflow item lists to group the potentially long list of individual workflow items coming from workflow-aware device objects.

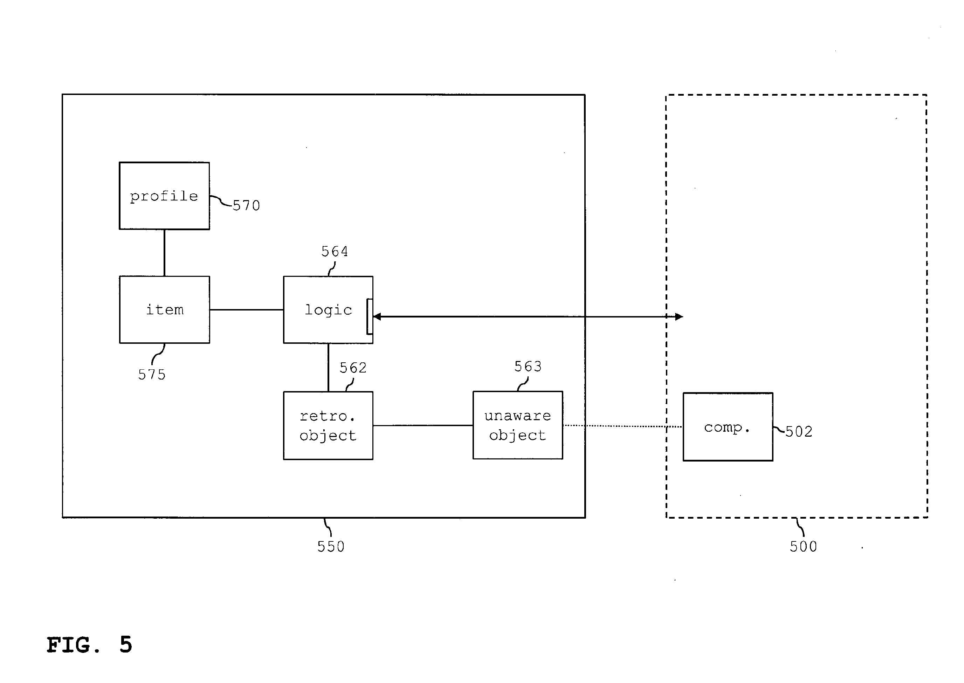

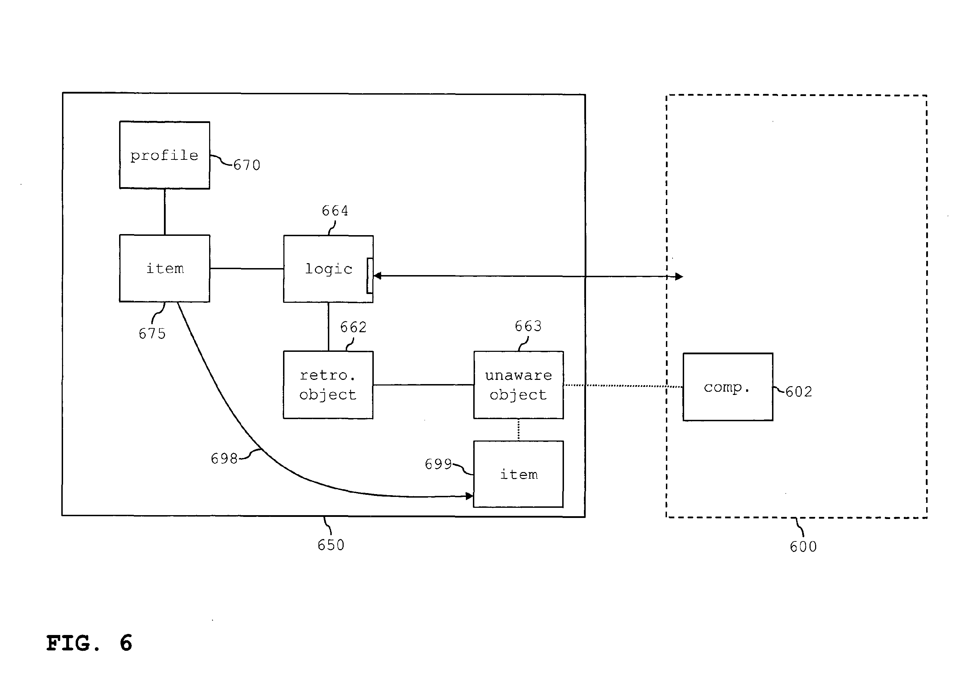

FIGs. 5 and 6 show workflow-aware retrofit objects 562, 662 associated with workflow-unaware objects 563, 663. Workflow-aware retrofit objects can be used to make workflow-unaware objects workflow-aware. For example, we consider an extensible DCS without any workflow-awareness, which is already operational. During a maintenance shutdown, a workflow support system and workflow logic for a particular type of temperature transmitter may be installed into the DCS and enabled. The workflow logic does not change the existing parts of the device instances (workflow-unaware object instances) for this type of temperature transmitter, it is only associated with them and accesses data (e.g., via OPC) such as device parameters that previously already existed. In another example, a DMS is exposing device related data via OPC. A workflow support system is installed that contains retrofit objects for the field devices and acts as an OPC client. It then provides data access for the workflow logic in the workflow-aware retrofit objects via OPC. The existing DMS has not to be modified in any way.

In the example of FIG. 5, an automation system component 502 of the automation system 500 is represented in the computer system 550 by the workflow-unaware object 563. A workflow-aware retrofit object 562 can now be associated with the workflow-unaware object 563. By establishing this association the workflow-unaware object 563 becomes workflow enabled through the logic of the computation component 564 of the associated workflow-aware retrofit object 562. This enables the computer system 550 to compute workflow items (e.g., workflow item 575) by using the logic of the computation component 564 also in relation to automation system components (e.g., component 502) which do not have an adequate workflow enabled representation in the computer system 550. The interface of the computation component 564 thereby is configured to receive the respective specific system data which are needed for evaluating respective workflow items. Thereby, the associated workflow item profile 570 includes the relevant profile information regarding the automation system component 502 in the same manner as if the retrofit workflow-aware object 562 would directly represent the automation system component 502.

FIG. 6 illustrates an alternative embodiment for implementing retrofit workflow-aware objects. In addition to the example described under FIG. 5 the work flow item 675 which is computed by the logic of the computation component 664 of the retrofit workflow-aware object 662 is added as an overlay to the workflow-unaware object 663 representing the automation system component 602. As a consequence, the workflow-unaware object 663 is directly associated with the computed workflow item 699 in a way as if it were its own data, comparable to the state that would exist if the object had been workflow-aware from the beginning. This can be done by injecting workflow logic and the workflow item profile into the existing workflow-unaware object (e.g., by adding variables and methods to an imported, tokenized Electronic Device Description (EDD) file) or by the DCS emulating this situation (e.g., by aggregating two separate objects, one being the retrofit object, for all purposes of data access). One method to achieve such emulation is by a suitable aggregation of two OPC Unified Architecture (OPC UA) objects. For example, the information model of an OPC UA server may expose automation device objects which are workflow-unaware. A second, so-called "aggregating server" according to the OPC UA standard, can provide a corresponding workflow-aware information model (i.e. with workflow-aware automation device objects) by taking the information from the existing workflow-unaware in the first server without any change and for each object associating the retrofit workflow logic and a source of workflow items generated by that logic. Toward a connected OPC UA client, the aggregating retrofit server and an originally workflow-aware server may behave exactly the same, while the retrofitted server does not have to be changed in any way.

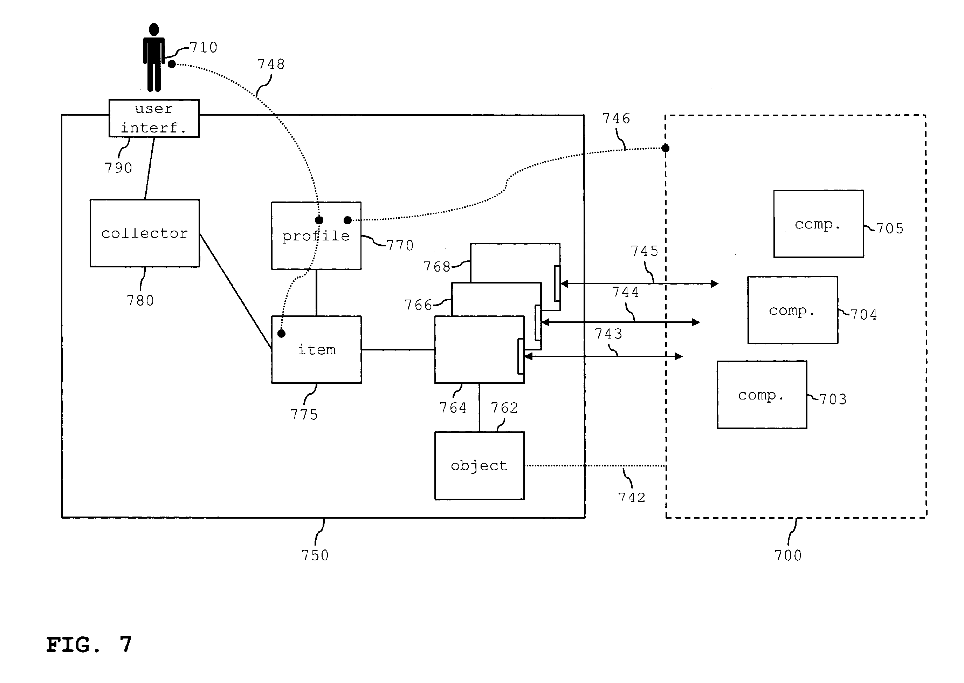

FIG. 7 shows a workflow-aware object 762 representing a grouping 700 of automation system components 703, 704, 705. Such a workflow-aware object can assess the workflow status based on its own data and based on data from other parts of the automation system. The workflow-aware object 762 can be associated with one or more computation components 764, 766, 768. Each of the computation components 764, 766, 768 may have logic configured to process specific data of the automation system related to a different grouping. For example, computation component 743 may be able to receive and process specific data related to the grouping 700 (e.g., a field bus), whereas computation components 744, 745 may relate to sub-groupings (e.g., components 703, 704) or to an individual field device component 705. In other words, the automation system can have groupings of automation system components and the specific data of the automation system can relate to any one of the groupings. In the computer system 750 respective computation components of a single workflow-aware object 762 representing such a grouping 700 may be able to evaluate the specific data for any sub-grouping within the grouping 700 down to the individual component level.

For example, the engineering of a communication network may require checking if all hosts in the network have been configured with addresses. A grouping workflow-aware object representing the communication network can aggregate the overall status of the device components of the network. It can further check if all host addresses are unique in the network (rather than each host checking its siblings on its own) and if they conform to the network address.

Such collaboration does not require the automation objects representing the communication host to be aware of workflows. It is sufficient that the automation object representing the overall network is aware. Furthermore, the profile used for the workflow item does not even have to be specific to network engineering. The minimum requirement may be that it is capable to describe a task, indicate a user or user group to perform the task, and reference the (workflow-unaware) objects on which the tasks might be performed (i.e., this is rather generic information compared to the specific task of network engineering).

The computer system 750 may further include a selector component configured to aggregate, sort, filter, and rate workflow items identified based on the object-specific data values of the workflow item profile. For example, during offline engineering, workflow items that relate to commissioning are filtered out. In another example, all items are grouped according to their criticality. In general, the selector component may be parameterized by the engineer to influence what is shown by the view component. It may be configured by the engineer to select items for communication with external connected systems. Further, the system may be preconfigured,(e.g. the system can be configured to be in a certain life-cycle phase such as commissioning, which indirectly configures only commissioning-related items to be shown).

In summary, with regards to the previously disclosed embodiments, the computer system may include multiple directories for tracking workflow-aware objects. Each directory may track one or more workflow-aware objects. It may equally track workflow unaware-objects along with information regarding which workflow-aware object provides workflow retrofit functionality (cf. retrofit workflow-aware objects). Each workflow-aware object may be associated with one or more computation components having logic to evaluate required work, instantiate a workflow item, and compute the values of the profile data of the instantiated workflow item. Each computation component logic may access various subsets of specific data of the automation system 100 (cf. FIG. 1). Such specific data may belong to the respective automation system component itself or to a parent component in case of groupings or any other accessible component. In general, the disclosed functions, automation objects, and workflow item profiles may also freely reference and access data from each other. Any logic may access any data from any automation object including other workflow items.

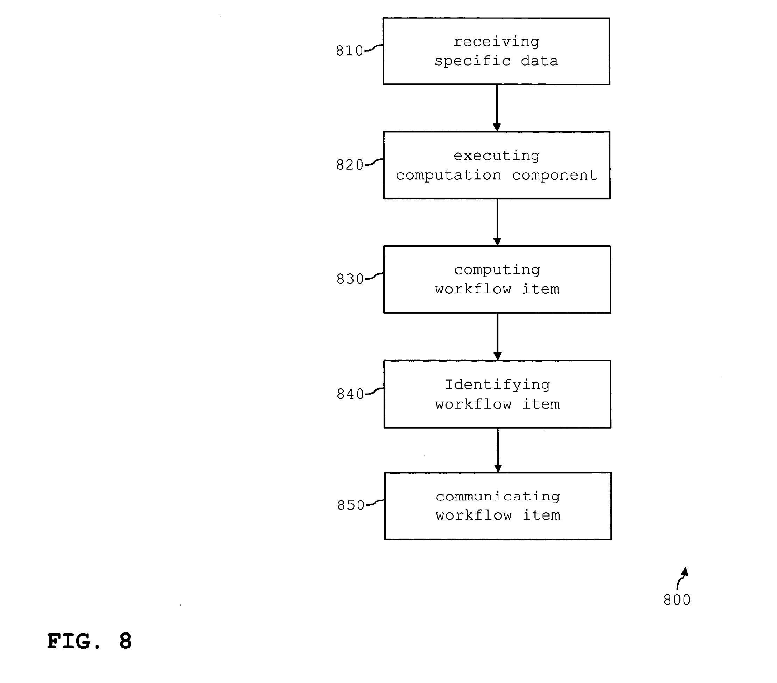

FIG. 8 illustrates a simplified flow chart of a computer implemented method 800 for support of an automation system engineer according to an embodiment of the invention.

The method 800 includes receiving 810 specific data of at least one component of an automation system wherein the at least one component is represented by a workflow-aware object of a plurality of workflow-aware objects. In the context of this disclosure, a component of the automation system can refer to a specific device component of the automation system or to any grouping of such components. That is, a component can also provide data on multiple device components. When executing 820 at least one computation component which is associated with the workflow-aware object it computes 830 a workflow item based on a workflow item profile with user related information, and based on the specific data of the automation system. The user related information is used to retrieve a user identifier being associated with the automation system engineer. The retrieved user identifier is associated can either be included in the workflow item profile or it can be accessed otherwise via user related information of the profile. The computer system running the method 800 can then identify 840 the workflow item based on predefined identification rules. For example, the workflow item profile and the retrieved user identifier can be used by the predefined identification rules. By using the retrieved user identifier the system can communicate 850 the identified workflow item for use by the automation system engineer 110.

The communication 850 may be implemented by sending the identified workflow item to a user interface of the computer system which is adapted to communicate the identified workflow item according to a work context. The context can, for example, can refer to the respective engineering phase in a superior workflow allowing the automation system engineer to navigate more efficiently through a list of workflow items because the workflow items can be sorted, filtered, or aggregated according to the context. In other words, the visualization of workflow items to the user may change depending on information derived from the context, such as, "filter" settings or phase information in case of a superior workflow definition.

The communicating 850 may also be implemented by sending the identified workflow item to an external system. In this embodiment, the workflow item may also be used as input for a machine-to-machine communication. The external system may enrich the workflow item with further external information for the automation system engineer.

Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. A computer system (150) for support of an automation system engineer (110), comprising:
at least one memory configured to store
a workflow-aware object (162) of a plurality of workflow-aware objects, wherein the workflow-aware object represents (142) at least one component (102) of an automation system (100); and
at least one computation component (164) which is associated with the workflow-aware object (162), and which has an interface (165) to receive (144) specific data of the automation system (100);
the computer system (150) further comprising at least one processor configured to execute:
the at least one computation component (164) to compute a workflow item (175) based on a workflow item profile (170) with user related information, and based on the specific data of the automation system (100), wherein the workflow item profile (170) specifies an object reference (146) to the at least one component (102) of the automation system (100), and wherein the user related information is configured for retrieval (148) of a user identifier being associated with the automation system engineer (110); and
a workflow item collector (180) configured to identify the workflow item (175) based on predefined identification rules ; and
the computer system (150) further comprising a user interface component (190) configured to communicate the identified workflow item (175) to the automation system engineer (110) by use of the retrieved (148) user identifier.

2. The computer system of claim 1, further comprising:
a workflow data structure (220, 240) representing an engineering phase (210, 230), wherein the workflow data structure (220, 240) has at least one workflow step (D1, D2, D3, M1, M2, M3), and wherein the workflow step (D1, D2, D3, M1, M2, M3) has an association (251, 252, 253) to a workflow task (T1, T2, T3) of the workflow-aware object (262);
the at least one memory further configured to store the association (251, 252, 253).

3. The computer system of claim 2, wherein the workflow data structure (220, 240) is combined with a further workflow data structure to compose a workflow (300).

4. The computer system of claim 2 or 3, wherein at least one processor is configured to instantiate the workflow task as a further workflow item prior to being identified by the workflow item collector.

5. The computer system of any one of the previous claims, wherein the specific data of the automation system received by the interface of the at least one computation component is based on another workflow-aware object.

6. The computer system (450) of any one of the previous claims, wherein the memory is further configured to store
a pure workflow-aware object (452) which is associated (447, 448) with the workflow-aware object (462, 466) and which is further associated with at least one further computation component (454), the least one further computation component (454) configured when executed by the at least one processor to compute a further workflow item (485) based on the workflow item (475).

7. The computer system (550, 650) of any one of the previous claims, wherein the at least one memory is further configured to store a workflow-aware retrofit object (562, 662) which is associated with a workflow-unaware object (563, 663) representing an arbitrary component (502, 602) of the automation system (500, 600).

8. The computer system of any one of the previous claims, wherein the workflow item references to a work context.

9. The computer system of any one of the previous claims, wherein the workflow item profile is being enriched based on commonalities of a subset of components of the automation system.

10. The computer system of any one of the previous claims, wherein the workflow item profile further comprises any one of the following:
user related information, object reference, technical task summary description, task management details, and technical task details.

11. The computer system of any one of the previous claims, further comprising a selector component configured to aggregate, sort, filter, and rate workflow items identified based on object-specific data values of the workflow item profile.

12. The computer system of any one of the previous claims, wherein the automation system has groupings of automation system components and the specific data of the automation system relates to any one of the groupings.

13. A computer implemented method (800) for support of an automation system engineer (110), comprising:
receiving (810) specific data of at least one component (102) of an automation system (100), wherein the at least one component (102) is represented by a workflow-aware object (162) of a plurality of workflow-aware objects;
executing (820) at least one computation component (164) which is associated with the workflow-aware object;
computing (830) by the at least one computation component (164) a workflow item (175) based on a workflow item profile (170) with user related information, and based on the specific data of the automation system (100), wherein the user related information is used to retrieve (148) a user identifier being associated with the automation system engineer (110);
identifying (840) the workflow item (175) based on predefined identification rules; and
by use of the retrieved (148) user identifier communicating (850) the identified workflow item for use by the automation system engineer (110).

14. The computer implemented method of claim 13, wherein the communication step sends the identified workflow item (175) to a user interface adapted to communicate the identified workflow item (175) according to a work context.

15. The computer implemented method of claim 13 or 14, wherein communicating (850) comprises:
sending the identified workflow item (175) to an external system.

16. A computer program product that when loaded into a memory of a computing device and executed by at least one processor of the computing device executes the steps of the computer implement method according to anyone of the claims 13 to 15.
